Europäisches Patentamt

European Patent Office

Office européen des brevets

(19)

(11) Veröffentlichungsnummer: **0 272 394 B1**

# EUROPÄISCHE PATENTSCHRIFT

(45) Veröffentlichungstag der Patentschrift: **10.04.91**

(51) Int. Cl.⁵: **B23B 31/28**

(21) Anmeldenummer: **87114774.0**

(22) Anmeldetag: **09.10.87**

(54) **Sicherheitseinrichtung.**

(30) Priorität: **24.12.86 DE 3644506**

(43) Veröffentlichungstag der Anmeldung:
**29.06.88 Patentblatt 88/26**

(45) Bekanntmachung des Hinweises auf die
Patenterteilung:
**10.04.91 Patentblatt 91/15**

(84) Benannte Vertragsstaaten:
**DE FR GB IT**

(56) Entgegenhaltungen:
**GB-A- 2 122 936**
**GB-A- 2 123 719**

(73) Patentinhaber: **SMW Schneider & Weisshaupt
GmbH
Wiesentalstrasse 28
W-7996 Meckenbeuren(DE)**

(72) Erfinder: **Hiestand, Karl, Ing.
Mühlweg 2
W-7998 Pfullendorf(DE)**

(74) Vertreter: **Engelhardt, Guido, Dipl.-Ing.
Patentanwalt Montafonstrasse 35 Postfach
1350
W-7990 Friedrichshafen 1(DE)**

## Beschreibung

Die Erfindung bezieht sich auf ein Kraftspannfutter mit einem Autriebsstrang, einer Hauptspinded, eines Sicherheitseinsichtung und in einem Futterkörper radial verstellbar geführten Spannbacnlmit, die einem Stellglied verbunden sind, das über den Antriebsstrang mit einem Antriebsglied, vorzugsweise einem extern zur Hauptspindel der Wrekzeugmaschine angeordneten Stellantrieb, in Triebverbindung steht.

Bei der Vorrichtung zum Erzeugen einer axialen Spannkraft für das radiale Verstellen der Spannbacken von Krafspannfuttern für umlaufende Arbeitsspindeln nach der DE-PS 33 14 629 mit einem Motor, dessen Antriebsmoment über einen mit der Arbeitsspindel umlaufenden Wälzschraubtrieb in die axiale Betätigungskraft umgeformt wird, ist zwar eine Bewegungssperre zum Verhindern einer Entspannbewegung infolge Massenkräften oder Spannkraftrückwirkung vorgesehen, diese ist jedoch als Reibungsbremse ausgebildet. Auf einen mit einem Glied des Schraubgliedes zusammenwirkenden Bremsring wirken hierbei Druckfedern ein, so daß dieser durch die Kraft dieser Federn ständig an der Mutter des Schraubtriebes anliegt oder entgegen der Kraft dieser Federn durch elektromagnetische Kräfte an einem an der Spindel angebrachten Halteflansch anpreßbar ist.

Bei dieser Bewegungssperre wird somit durch die Reibungsbremse die Drehbeweglichkeit auch während eines Spannvorganges, da der Bremsring ständig an der Mutter anliegt, behindert, bzw. es ist von außen elektrische Energie zuzuführen, um die Reibungsbremse entgegen der Kraft der Federn auszuschalten. Dadurch wird, bedingt durch den erhöhten Energieaufwand, nicht nur der Gesamtwirkungsgrad der Vorrichtung ungünstig beeinflußt, sondern es ist insbesondere von Nachteil, daß eine Blockierung des Antriebssystems nicht zu bewerkstelligen ist. Je nach Größe eines abzubremsenden Momentes kann nämlich eine Reibungsbremse mehr oder weniger durchrutschen, so daß diese nur bedingt als Bewegungssperre wirksam sein kann und eine stets zufriedenstellende Funktion sowie eine hohe Betriebssicherheit mit der bekannten Ausgestaltung nicht zu erzielen sind.

Aufgabe der Erfindung ist es daher, ein Kraftspannfutter der eingangs genannten Art zu schaffen, bei dem auf mechanische Weise und ohne großen Bauaufwand der zur Verstellung der Spannbacken vorgesehene Antriebsstrang unmittelbar nach dem Auftreten einer Störung, beispielsweise einer Beschädigung eines Antriebsgliedes, blokkiert wird, so daß eine Rückdrehbewegung und damit ein Entspannen eines Werkstückes zuverlässig verhindert wird. Die Spannkraft soll vielmehr in nahezu voller Höhe auch bei einer Betriebsstörung erhalten bleiben, und es soll gewährleistet sein, daß ein eingespanntes Werkstück nicht weggeschleudert wird. Vor allem soll eine formschlüssige Verriegelung in beiden Drehrichtungen des Kraftspannfutters kurzfristig vorgenommen werden können, ohne daß die Drehbeweglichkeit der Antriebsglieder, wie dies bei einer Reibungsbremse der Fall ist, behindert wird.

Gemäß der Erfindung wird dies dadurch erreicht, daß in den zur Verstellung der Spannbacken vorgesehenen Antriebsstrang des Kraftspannfutters zwei begrenzt gegeneinander verdrehbare Bauteile eingesetzt sind, die über ein im ersten Bauteil gehaltenes und in dem zweiten, an des flauptspindel angbzachten Bauteil begrenzt verstellbares Steuerglied trieblich miteinander verbunden sind, und daß zur Blockierung dieses Antriebsstranges ein doppelseitig wirksames umsteuerbares Gesperre vorgesehen ist, dessen Sperrglieder in dem zweiten Bauteil abgestützt und in Abhängigkeit von der jeweiligen Spannrichtung der Spannbacken des Kraftspannfutters durch das Steuerglied wechselweise entriegelt sind.

Das Gesperre kann in einfacher Ausgestaltung durch zwei entgegen der Kraft einer Feder jeweils nach außen verschwenkbar in dem zweiten Bauteil gelagerte Sperrklinken gebildet werden, deren Sperrzähne mit einer an dem Stellglied oder einem mit diesem in Triebverbindung stehenden Zwischenglied angebrachten Verzahnung zusammenwirken, wobei die Schwenkbewegung der Sperrklinken nach innen durch zwischen diesen angeordnete, biespielsweise durch einen Steg des zweiten Bauteils gebildete Anschläge, begrenzt sein sollte.

Nach einer andersartigen Ausgestaltung kann das Gesperre auch durch zwei entgegen der Kraft einer Feder jeweils nach außen verschwenkbar in dem zweiten Bauteil gelagerte Klemmhebel gebildet werden, deren dem Verstellglied oder einem mit diesem trieblich verbundenen Zwischenglied zugekehrte Enden als gekrümmte Klemmflächen auszubilden sind und mit diesem zusammenwirken.

Hierbei ist es angezeigt, die mit den Klemmhebeln zusammenwirkende Klemmfläche und/oder deren Klemmflächen mit einem Reibbelag zu versehen.

Die Sperrklinken bzw. Klemmhebel der Gesperre können in einfacher Weise in eine stirnseitig in das zweite Bauteil eingearbeitete Ausnehmung eingesetzt und auf achsparallel zur Hauptspindel der Werkzeugmaschine angeordnete Bolzen oder unmittelbar in dem zweiten Bauteil verschwenkbar gelagert werden. Außerdem sollten die Sperrklinken bzw. die Klemmhebel der Gesperre derart an dem zweiten Bauteil verschwenkbar gelagert werden, daß diese in Sperrstellung parallel zu der zwischen diesen verlaufenden Durchmesserlinie angeordnet sind, wobei diese zum Massenausgleich mit Freisparungen, z. B. in Form von Bohrungen, versehen sein sollten.

Des weiteren ist es möglich, das Gesperre auch durch zwei jeweils entgegen der Kraft einer Feder tangential zu einem Grundkreis nach außen in einer in das zweite Bauteil eingearbeiteten durchgehenden oder einer V-förmig gestalteten Ausnehmung eingesetzte Rastbolzen zu bilden, die mit nach innen gerichteten mit einer auf dem Stellglied oder einem mit diesen trieblich verbundenen Zwischenglied angebrachten Verzahnung zusammenwirkenden Rastnasen versehen sind.

Das Steuerglied sollte jeweils zwischen den Sperrklinken, den Klemmhebeln oder den Rastbolzen der Gesperre angeordnet sein und kann in einfacher Ausgestaltung aus einem parallel zur Längsachse der Hauptspindel der Werkzeugmaschine angeordneten Bolzen bestehen.

Um beide Drehrichtungen des Kraftspannfutters in einem Notfall blockieren zu können, ist es ferner vorteilhaft, das Steuerglied mit einer vorzugsweise im Bereich der Trennung der beiden gegeneinander begrenzt verdrehbaren Bauteile angeordneten Sollbruchstelle, beispielsweise in Form einer Einschnürung, auszustatten.

Zweckmäßig ist es des weiteren, das erste Bauteil auf einer an dem zweiten Bauteil angeformten Schulter verdrehbar zu lagern und zwischen diesen ein Gleit- oder Wälzlager vorzusehen.

Das gemäß der Erfindung ausgebildete Kraftspannfutter ist nicht nur einfach in der konstruktiven Ausgestaltung und somit auf wirtschaftliche Weise herstellbar, sondern dieses weist auch eine hohe Betriebssicherheit auf und ermöglicht es vor allem, den den Spannbacken zugeordneten Arbeitsstrang kurzfristig zu blockieren und damit stillzusetzen, so daß ein selbsttätiges Entspannen eines Werkstückes zuverlässig verhindert wird. Werden nämlich in diesem Antriebsstrang zwei begrenzt gegeneinander verdrehbare Bauteile, die über ein Steuerglied trieblich miteinander verbunden sind, eingesetzt und wird des weiteren ein doppelseitig wirksames umsteuerbares in unterschiedlicher Weise auszubildendes Gesperre vorgesehen, dessen Sperrglieder durch das Steuerglied wechselweise entriegelt sind, so wird bei einer geringfügigen Rückdrehbewegung in der jeweils gesicherten Drehrichtung mittels eines der Sperrglieder der Gesperre sofort eine formschlüssige Verbindung zwischen zwei Teilen des Antriebsstranges, beispielsweise zwischen einem mit dem Spindelmotor verbundenen Antriebsglied und einem mit dem Stellglied gekoppelten Zwischenglied, vorgenommen, und diese werden verblockt. Ein eingespanntes Werkstück kann demnach in keinem Fall aus dem Kraftspannfutter geschleudert werden. Die jeweils wirksame Verriegelung ist nur mit Hilfe des Steuergliedes wiederum lösbar.

Da die Sperrglieder der Gesperre in Abhängigkeit von der jeweiligen Spannrichtung der Spannbacken des Kraftspannfutters entriegelt sind, sind die Gesperre problemlos umsteuerbar und bilden somit in beiden Spannrichtungen eine zuverlässige Rücklaufsicherung. Außerdem ist zur Betätigung einer derartigen Sicherheitseinrichtung keine Energie gesondert dieser zuzuführen, und im Betrieb sind keine z. B. durch die Anpassung einer Reibscheibe bedingten Widerstände zu überwinden, die Drehbeweglichkeit der Antriebsglieder wird vielmehr durch die erfindungsgemäße Ausgestaltung nicht behindert. Auch sind die Gesperre unabhängig von der Fliehkraft und der jeweiligen Einbaulage wirksam, so daß eine hohe Zuverlässigkeit und eine große Betriebssicherheit der in beiden Drehrichtungen des Kraftspannfutters einsetzbaren Sicherheitseinrichtung gegeben sind.

In der Zeichnung sind einige Ausführungsbeispiele der dem gemäß der Erfindung ausgebildeten Kraftspannfutter zugeordneten Sicherheitseinrichtung dargestellt, die nachfolgend im einzelnen erläutert sind. Hierbei zeigen:

Figur 1    ein mit einem externen Stellantrieb zur Betätigung der Spannbacken versehenes Kraftspannfutter und einer in diesen Antriebsstrang eingebautern Sicherheitseinrichtung, in einem Axialschnitt,

Figur 2    einen Schnitt nach der Linie II - II der Sicherheitseinrichtung in einer vergrößerten Darstellung,

Figur 3    eine andersartige Ausgestaltung der Sicherheitseinrichtung in einem Schnitt nach der Figur 2 und

Figur 4    eine weitere Ausführungsform einer Sicherheitseinrichtung in einem Schnitt nach Figur 2.

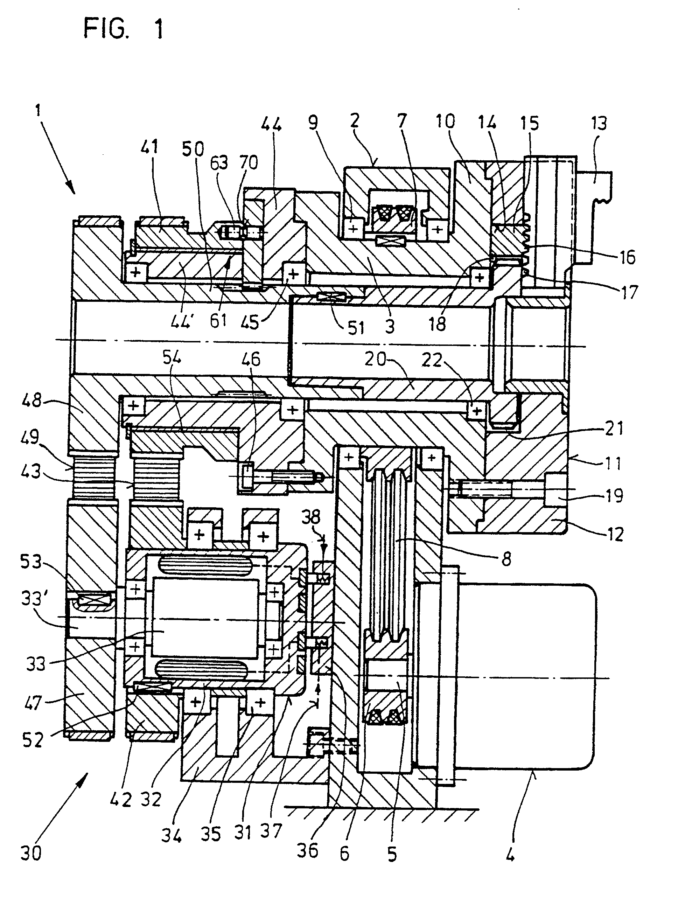

Die in Figur 1 dargestellte und mit 1 bezeichnete Einrichtung dient zur Betätigung der Spannbacken 13 eines auf einer Werkzeugmaschine 2 angeordneten Kraftspannfutters 11, die in einem Futterkörper 12 radial verstellbar sind. Dazu ist ein Stellglied 20 vorgesehen, das mittels Wälzlager 22 verdrehbar gelagert ist.

Das Stellglied 20 ist über einen Zahnkranz 21 mit jeweils in einer Ausnehmung 14 des Futterkörpers 12 tangential verschiebbar geführten Keilstangen 15 trieblich verbunden, die dazu auf der Innenseite mit einer Verzahnung 18 versehen sind. Außerdem weisen die Keilstangen 15 auf der den Spannbacken 13 zugekehrten Stirnseite eine weitere Verzahnung 16 auf, die in eine in die Spannbacken 13 eingearbeitete Verzahnung 17 eingreift.

Das Kraftspannfutter 11 ist mittels Schrauben 19 an einem Spindelflansch 10 der Hauptspindel 3 der Werkzeugmaschine 2 befestigt, die durch einen Motor 4 antreibbar ist. Dazu sind auf der Abtriebswelle 5 des Motors 4 sowie der mittels Lager 9 abgestützten Hauptspindel 3 Keilriemenscheiben 6 bzw. 7 drehfest gelagert, die durch Keilriemen 8 trieblich miteinander verbunden sind.

Zum Antrieb des Stellgliedes 20 und damit der Spannbacken 13 des Kraftspannfutters 11 durch die Einrichtung 1 ist ein Stellantrieb 30 vorgesehen, der in Triebverbindung mit der Hauptspindel 3 der Werkzeugmaschine 2 steht.

Um dies zu bewerkstelligen, ist an der Hauptspindel 3 eine Hülse 44 mittels Schrauben 46 angebracht, die eine Zahnriemenscheibe 41 trägt. Über einen Zahnriemen 43 ist die Zahnriemenscheibe 41 mit einer Zahnriemenscheibe 42 zwangläufig verbunden, die über eine Keilverbindung 52 drehfest auf einem mittels Wälzlager 35 in einem ortsfesten Halter 34 abgestützten Stator 32 eines verspannbaren Rotationsmotors 31 gelagert ist auf dessen Abtriebswelle 33' ebenfalls über eine Keilverbindung 53 eine weitere Zahnriemenscheibe 47 angeordnet ist, die über eine Zahriemen 49 mit einer Zahnriemenscheibe 48 in Triebverbindung steht. Über einen an dieser vorgesehenen Ansatzt 50, auf dem die Hülse 44 mittels Wälzlager 45 drehbar gelagert ist, und mittels eines Keiles 51 ist die Zahnriemenscheibe 48 mit dem Stellglied 20 verbunden, so daß dieses bei verspanntem Rotationsmotor 31, der in diesem Ausführungsbeispiel als Elektromotor ausgebildet ist und in diesem Betriebszustand als Block umläuft, mit der Hauptspindel 3 der Werkzeugmaschine 2 trieblich gekoppelt ist.

Um eine Verstellbewegung der Spannbacken 13 vorzunehmen, ist lediglich der Rotor 33 des Rotationsmotors 31 gegenüber dessen Stator 32 durch Zufuhr von elektrischer Energie über die Zuführungsleitungen 37 und 38 sowie einen feststehenden Bürstenhalter 36 mehr oder weniger zu verdrehen. Der Stator 33 ist dabei über den durch die Zahnriemenscheiben 42 und 41 sowie den Zahnriemen 43 gebildeten Riementrieb an der Hauptspindel 3 abgestützt. Durch die Verdrehung des Rotors 32 wird somit eine Relativverdrehung der beiden Zahnriemenscheiben 42 und 47 gegeneinander ausgelöst und die Drehzahl des Stellgliedes 20 wird für eine kurze Zeit verändert, die Spannbacken 13 werden demnach je nach Drehrichtung nach innen oder außen verstellt.

Zu Beginn eines Spannvorganges wird bei stehender Hauptspindel 3 der Werkzeugmaschine 2, sobald das in dem Kraftspannfutter 11 einzuspannende Werkstück zwischen den Spannbacken 13 eingelegt ist, der Rotationsmotor 31 betätigt, so daß durch dessen Rotor 33 über den durch die Zahnriemenscheiben 47, 48 und den Zahnriemen 49 gebildeten Riementrieb das Stellglied 20 angetrieben und somit die Spannbacken 13 so lange verstellt werden, bis ein Gleichgewichtszustand zwischen der von dem Rotationsmotor 31 aufgenommenen Energie und der von der Spannbacken 13 auf das Werkstück ausgeübten Spannkraft erreicht ist. Diese kann demnach ohne Schwierigkeiten auf äußerst einfache Weise den jeweiligen Erfodernissen angepaßt bzw. reproduziert werden.

Da der Rotor 33 des Rotationsmotors 31 gegenüber dessen Stator 32 über das aufgebaute Magnetfeld verspannbar ist, laufen der gesamte Rotationsmotor 31, sobald die Hauptspindel 3 mittels des Motors 4 in Betrieb gesetzt wird und die mit dessen Funktionsgliedern verbundenen Bauteilen gewissermaßen als Block um. Die Lage des Stellgliedes 20 wird demnach nicht verändert, vielmehr ist dieses durch den verspannten Rotationsmotor 31, dessen Funktionsglieder in diesem Betriebszustand nicht gegeneinander verdrehbar sind, fixiert.

Wird jedoch, um beispielsweise eine Nachspannung vorzunehmen, die Energiezufuhr des Rotationsmotors 31 verändert, so wird dessen Rotor 33, und zwar auch bei umlaufendem Stator 32 relativ zu diesem entsprechend der zugeführten Energie verdreht, so daß das Stellglied 20 nachgeführt und somit die Spannkraft erhöht wird. Über die Zahnriemenscheiben 41 und 42 sowie den diese verbindenden Zahnriemen 43 ist dabei der Stator 32 des Rotationsmotors 31 an der Hauptspindel 3 der Werkzeugmaschine 2 abgestützt. In gleicher Weise ist auch eine Reduzierung der Spannkraft zu bewerkstelligen.

Um auzuschließen, daß beispielsweise bei einem unvorhersehbaren Bruch einer der Zahnriemen 43 oder 49 eine Rückdrehbewegung ausgelöst und somit ein eingespanntes Werkstück bei umlaufendem Kraftspannfutter 12 selbsttätig entspannt würde, ist in dessen Antriebsstrang eine in unterschiedlicher Weise · ausgebildete Sicherheitseinrichtung 61 bzw. 61' bzw. 61″ eingebaut, durch die eine Rückstellbewegung des Stellgliedes 20 in der jeweils gesicherten Drehrichtung zuverlässig verhindert wird.

Die Sicherheitseinrichtungen 61, 61' oder 61″ bestehen jeweils aus der Zahnriemenscheibe 41 als erstes Bauteil, der gegenüber dieser begrenzt verdrehbaren Hülse 44 als zweites Bauteil, einem in dieser eingebauten in unterschiedlicher Weise gestalteten Gesperre 71, 81 oder 91 sowie einem Steuerglied 63, das mit den jeweils in einer Ausnehmung 62 bzw. 62″ der Hülse 44 eingesetzten Gesperre 71, 81 oder 91 zusammenwirkt. Zur Halterung der Riemenscheibe 71 ist die Hülse 44 mit einer angeformten Schulter 44' versehen, auf der über ein Gleitlager 54 die Zahnriemenscheibe 41 verdrehbar gelagert ist.

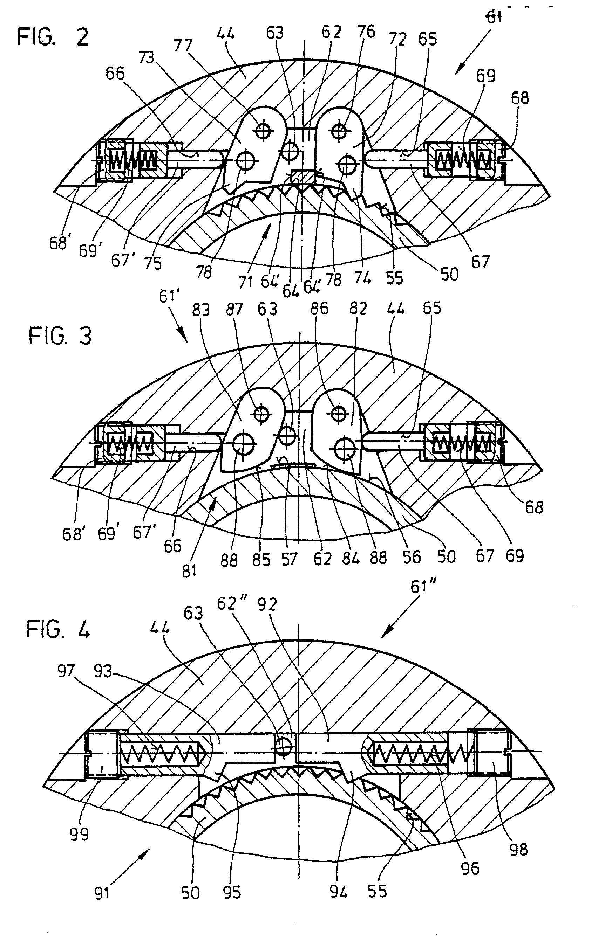

Bei der Ausgestaltung nach Figur 2 ist das Gesperre 71 durch zwei Sperrklinken 72 und 73 gebildet, die verschwenkbar auf Bolzen 76 und 77 gelagert sind und mit ihren Sperrzähnen 74 und 75 wechselweise mit einer Verzahnung 55 zusammenwirken, die in den Ansatz 50 der Zahnriemenscheibe 48 eingearbeitet ist. Auf die Sperrklinken 72 und 73 wirken in Ausnehmungen 65 und 66 eingesetzte Bolzen 67 und 67' ein, die jeweils durch die Kraft einer an in die Ausnehmungen 65 und 66 eingeschraubte Muttern 68, 68' abgestützten Druckfeder 69, 69' verstellbar sind. Unabhängig von der Einbaulage werden somit die Sperrklinken 72 und 73 je nach dem, welche Drehrichtung gegen eine Rückdrehung ge sichert werden soll, in Sperrstellung gehalten. Des weiteren sind die Sperrklinken 72 und 73, deren Verstellwege nach innen durch an einem Steg 64 der Hülse 44 vorgesehene Anschläge 64' bzw. 64" begrenzt sind, zum Massenausgleich mit Freisparungen 78 versehen.

Die Zahnriemenscheibe 41 ist über das in diese eingesetzte Steuerglied 63 trieblich mit der Hülse 44 verbunden. Wird über diese Bauteile ein Drehmoment übertragen, so werden diese bis zur Anlage des Steuergliedes 63 an einer der Sperrklinken 72 oder 73 begrenzt gegeneinander verdreht und die betreffende Sperrklinke, in Figur 1 die Sperrklinke 73, wird in einer entriegelten Lage gehalten. Der Ansatz 50 und die mit diesen verbundenen Teile können somit nur im Uhrzeigersinn verdreht werden, die Sperrklinke 72 ratscht dabei entgegen der Kraft der Druckfeder 69 über die Verzahnung 55 hinweg.

Wird jedoch, aus welchem Grund auch immer, der Ansatz 50 zurückgedreht, d. h. es soll eine Bewegung entgegen dem Uhrzeigersinn ausgeführt werden, so wird diese Rückdrehbewegung durch die in die Verzahnung 55 eingreifende Sperrklinke 72 verhindert. Und da der Ansatz 50 über das Stellglied 40 mit den Spannbacken 13 des Kraftspannfutters 11 gekuppelt ist, ist somit ein Entspannen eines eingespannten Werkstückes ausgeschlossen. Durch eine Umkehrung der Drehrichtung der Zahnriemenscheibe 41 und eine Relativverdrehung gegenüber der Hülse 44 kann die Verriegelung des Ansatzes 50 durch die Sperrklinke 72 mittels des Steuergliedes 63, durch das die Sperrklinke 73 nach außen geschwenkt wird, ohne Schwierigkeiten gelöst werden; dagegen wirkt in diesem Betriebszustand die Sperrklinke 72 als Rückdrehsicherung.

Bei der Ausgestaltung nach Figur 3 sind die das Gesperre 81' bildenden Sperrglieder als Klemmhebel 82 und 83 ausgebildet, die ebenfalls auf Bolzen 86 und 87 entgegen der Kraft der Druckfeder 69 bzw. 69' mit Hilfe des Steuergliedes 63 verschwenkbar gelagert sind. Die Klemmflächen 84 und 85 der ebenfalls mit Freisparungen 88 zum Massenausgleich versehenen Klemmhebel 82 und 83 wirken mit einer an dem Ansatz 60 vorgesehenen Klemmfläche 56 zusammen, auf der, wie dies teilweise eingezeichnet ist, ein Reibbelag 57 angebracht sein kann. Bedingt durch die Ausgestaltung der Klemmflächen 84 und 85 als gekrümmte Flächen und die Lagerung der Hebel 82 und 83 werden diese bei einem Klemmvorgang zwischen dem Ansatz 55 und der Hülse 44 verzwängt, so daÖ zwischen diesen eine formschlüssige Verbindung gegeben ist und der Ansatz 50 nur bei einem Bruch einer der Bolzen 86 oder 87 bzw. der Klemmhebel 82 oder 83 zurückgedreht werden kann.

Gemäß Figur 4 ist das Gesperre 91 der Sicherheitseinrichtung 61" mit zwei in einer tangential zu einem Grundkreis verlaufenden Ausnehmung 62" der Hülse 44 eingesetzte einander gegenüberliegend angeordnete Rastbolzen 92 und 93 gebildet, an denen Rastvorsprünge 94 und 95 angebracht sind, die wechselweise in die Verzahnung 55 des Ansatzes 50 eingreifen können. Auf die Rastbolzen 92 und 93 wirken Druckfedern 96 bzw. 97 ein, die sich an in die Ausnehmung 62" eingeschraubte Muttern 98 und 99 abstützen. Die Rastbolzen 92 und 93 sind in gleicher Weise durch eine Verdrehung der Zahnriemenscheibe 41 gegenüber der Hülse 44 mit Hilfe des Steuergliedes 63 entriegelbar und gewährleisten, da dieses sich an der Hülse 44 abstützt, daß der Ansatz 50 in der jeweils gesicherten Drehrichtung nicht zurückgedreht werden kann.

Das Steuerglied 63, das bei dem gezeigten Ausführungsbeispielen als einen zwischen den Sperrgliedern der Gesperre 71, 81 oder 91 angeordneter Bolzen ausgebildet ist, ist mit einer Sollbruchstelle in Form einer Einschnürung 70 ausgestattet. Bei einer, aus welchem Grund auch immer, bedingten Überbeanspruchung wird somit das Steurglied 63 abgeschert, so daß mittels der in diesem Fall gemeinsam mit dem Ansatz 50 zusammenwirkenden Sperrglieder der Gesperre 71, 81 oder 91 eine Blockierung in beiden Drehrichtungen sichergestellt ist.

**Ansprüche**

1. Kraftspannfutter (11) mit einem Antriebsstrang, einer Hauptspindel, einer Sicherheitseinrichtung und in einem Futterkörper (12) radial verstellbar geführten Spannbcken (13), die mit einem Stellglied (20) verbunden sind, das über den Anriebsstrang mit einem Antriebsglied, vor-zugsweise einem extern zur Hauptspindel (3) der Werkzeugmaschine (2) angeordneten Stellantrieb (30), in Triebverbindung steht,
   **dadurch gekennzeichnet,**
   daß in den zur Verstellung der Spannbacken (13) vorgesehenen Antriebsstrang des Kraftspannfutters (11) zwei begrenzt gegeneinander verdrehbare Bauteile (Zahnriemenscheibe 41, Hülse 44) eingesetzt sind, die über ein im ersten Bauteil (Zahnriemenscheibe 41) gehaltenes und in dem zweiten, an einem flaupspindel (3) angebrachten Bauteil (Hülse 44) begrenzt verstellhares Steuerglied (63) trieblich miteinander verbunden sind, und daß zur Blokkierung dieses Antriebsstranges ein doppelseitig wirksames umsteuerbares Gesperre (71; 81; 91) vorgesehen ist, dessen Sperrglieder (72, 73; 82, 83; 92, 93) an dem zweiten Bauteil (Hülse 44) abgestützt und in Abhängigkeit von der jeweiligen Spannrichtung der Spannbacken (13) des Kraftspannfutters (11) durch das Steuerglied (63) wechselweise entriegelt sind.

2. Kraftspannfutter nach Anspruch 1,
**dadurch gekennzeichnet**
daß das Gesperre (71) durch zwei entgegen der Kraft einer Feder (69, 69') jeweils nach außen verschwenkbar in dem zweiten Bauteil (Hülse 44) gelagerte Sperrklinken (72, 72) gebildet sind, deren Sperrzähne (74, 75) mit einer auf dem Stellglied (20) oder einem mit diesem in Triebverbindung stehenden Zwischenglied (Ansatz 50) angebrachten Verzahnung (55) zusammenwirken.

3. Kraftspannfutter nach Anspruch 2,
**dadurch gekennzeichnet,**
daß die Schwenkbewegung der Sperrklinken (72, 73) nach innen durch zwischen diesen angeordnete beispielsweise durch einen Steg (64) des zweiten Bauteils (Hülse 44) gebildeten Anschläge (64', 64'') begrenzt ist.

4. Kraftspannfutter nach Anspruch 1,
**dadurch gekennzeichnet,**
daß das Gesperre (81) durch zwei entgegen der Kraft einer Feder (69, 69') jeweils nach außen verschwenkbar in dem zweiten Bauteil (Hülse 44) gelagerte Klemmhebel (82, 83) gebildet sind, deren dem Verstellglied (20) oder einem mit diesem trieblich verbundenen Zwischenglied (Ansatz 50) zugekehrte Enden als gekrümmte Klemmflächen (84, 85) ausgebildet sind und mit diesem zusammenwirken.

5. Kraftspannfutter nach Anspruch 4,
**dadurch gekennzeichnet,**
daß die mit den Klemmhebeln (83, 83) zusammenwirkende Klemmfläche (56) und/oder deren Klemmflächen (84, 85) mit einem Reibbelag (57) versehen sind.

6. Kraftspannfutter nach einem oder mehreren der Ansprüche 1 bis 5,
**dadurch gekennzeichnet,**
daß die Sperrklinken (72, 73) bzw. die Klemmhebel (82, 83) der Gesperre (71 bzw. 81) in eine stirnseitig in das zweite Bauteil (Hülse 44) eingearbeitete Ausnehmung (62) eingesetzt und auf achsparallel zur Hauptspindel (3) der Werkzeugmaschine (2) angeordnete Bolzen (76, 77; 86, 87) oder unmittelbar in dem zweiten Bauteil (Hülse 44) verschwenkbar gelagert sind.

7. Kraftspannfutter nach einem oder mehreren der Ansprüche 1 bis 6,
**dadurch gekennzeichnet,**
daß die Sperrklinken (72 73) bzw. die Klemmhebel (82, 83) der Gesperre (71 bzw. 81) derart in dem zweiten Bauteil (Hülse 44) verschwenkbar gelagert sind, daß diese in Sperrstellung parallel zu der zwischen diesen verlaufenden Durchmesserlinie angeordnet sind.

8. Kraftspannfutter nach Anspruch 7,
**dadurch gekennzeichnet,**
daß die Sperrklinken (72, 73) bzw. die Klemmhebel (82, 83) der Gesperre (71 bzw. 81) zum Massenausgleich mit Freisparungen (76 bzw. 78) ,z. B. in Form von Bohrungen, versehen sind.

9. Kraftspannfutter nach Anspruch 1,
**dadurch gekennzeichnet,**
daß das Gesperre (91) durch zwei jeweils entgegen der Kraft einer Feder (96, 97) tangential zu einem Grundkreis nach außen verschiebbar in einer in das zweite Bauteil (Hülse 44) eingearbeiteten durchgehenden oder einer V-förmig gestalteten Ausnehmung (62'') eingesetzte Rastbolzen (92, 93) gebildet sind, die mit nach innen gerichteten mit einer auf dem Stellglied (20) oder einem mit diesem trieblich verbundenen Zwischenglied (Ansatz 50) angebrachten Verzahnung (55) zusammenwirkenden Rastnasen (94, 95) versehen sind.

10. Kraftspannfutter nach einem oder mehreren der Ansprüche 1 bis 9,
**dadurch gekennzeichnet,**
daß das Steuerglied (63) jeweils zwischen den Sperrklinken (72, 73) den Klemmhebeln (82, 83) bzw. den Rastbolzen (92, 93) der Gesperre (71; 81; 91) angeordnet ist.

11. Kraftspannfutter nach einem oder mehreren der Ansprüche 1 bis 10,
**dadurch gekennzeichnet,**
daß das Steuerglied (63) als ein parallel zur Längsachse der Hauptspindel (3) der Werkzeugmaschine (2) angeordneter Bolzen ausgbildet ist.

12. Kraftspannfutter nach einem oder mehreren der Ansprüche 1 bis 11,
    **dadurch gekennzeichnet,**
    daß das Steuerglied (63) mit einer, vorzugsweise im Bereich der Trennung der beiden gegeneinander begrenzt verdrehbaren Bauteile (Zahnriemenscheibe 41, Hülse 44) angeordneten Sollbruchstelle, beispielsweise in Form einer Einschnürung (70), versehen ist.

13. Kraftspannfutter nach einem oder mehreren der Ansprüche 1 bis 12,
    **dadurch gekennzeichnet,**
    daß das erste Bauteil (Zahnriemenscheibe 41) auf einer an dem zweiten Bauteil (Hülse 44) angeformten Schulter (44') verdrehbar gelagert ist.

14. Kraftspannfutter nach einem oder mehreren der Ansprüche 1 bis 13,
    **dadurch gekennzeichnet,** daß zwischen den beiden gegeneinander begrenzt verdrehbaren Bauteilen (Zahnriemenscheibe 41, Hülse 44) ein Gleit- oder Wälzlager (54) angeordnet ist.

**Claims**

1. Powered chuck (11) with a driveline, a main spindle, a safety device and chuck jaws (13) radially adjustable in a chuck head (12) connected to an actuator (20) which is positively connected to a drive unit by means of a driveline, preferably to an actuator drive unit (30) arranged externally on the main spindle (3) of the machine tool (2),
   **characterized in that**
   the driveline of the powered chuck (11) which is intended to adjust the chuck jaws (13) contains two rotating components which can rotate relative to one another to a limited extent (toothed belt pulley 41, sleeve 44) and which are positively connected by a control member which is rigidly mounted to the first component (toothed belt pulley 41) and can be adjusted to a limited extent on the second component (sleeve 44) arranged on the main spindle (3) and in that, to block this driveline, a dual-action, reversible interlock (71; 81; 91) is provided whose locking elements (72, 73; 82, 83; 92, 93) are supported on the second component (sleeve 44) and can be released alternately by the control member (63) acting in response to the prevailing clamping direction of the chuck jaws (13) in the powered chuck (11).

2. Powered chuck as claimed in claim 1,
   **characterized in that**
   the interlock (71) is arranged as two locking pawl elements (72, 73) located in the second component (sleeve 44) which act against the force of a spring (69, 69'), each of which can be swivelled outwards and whose locking teeth (74, 75) mesh with a spline (55) arranged on an actuator (20) or on an intermediate member (item 50) which is positively connected to the actuator (20).

3. Powered chuck as claimed in claim 2,
   **characterized in that**
   the inwards swivel motion of the pawl elements (72, 73) is limited by means of stops (64', 64") arranged between them, possibly as a web (64) on the second component (sleeve 44).

4. Powered chuck as claimed in claim 1,
   **characterized in that**
   the interlock (81) is arranged as two clamping levers (82, 83) located in the second component (sleeve 44) which act against the force of a spring (69, 69'), each of which can be swivelled outwards and whose facing ends (84, 85) are arranged as arcuate clamping faces which act together with an actuator (20) or an intermediate member (item 50) which is positively connected to the actuator (20)

5. Powered chuck as claimed in claim 4,
   **characterized in that**
   the clamping face (56) acting together with the clamping levers (82, 83) and/or their own clamping faces (84, 85) are provided with a friction coating (57).

6. Powered chuck as claimed in one or more of claims 1 to 5,
   **characterized in that**
   the pawl elements (72, 73) or the clamping levers (82, 83) of the interlocks (71 and 81 respectively) are installed in a recess (62) arranged in the face end of the second component (sleeve 44) and are swivel-mounted on pins (76, 77; 86, 87) arranged parallel to the axis of the main spindle (3) of the machine tool (2) or directly in the second component (sleeve 44).

7. Powered chuck as claimed in one or more of claims 1 to 6,
   **characterized in that**
   the pawl elements (72, 73) or the clamping levers of the interlock (71 and 81 respectively) are swivel-mounted in the second component (sleeve 44) in such a way that they are arranged parallel to the diameter line which passes through them in locked position.

8. Powered chuck as claimed in claim 7, **characterized in that** the pawl elements (72, 73) or the clamping levers (82, 83) of the interlock (71 and 81 respectively) are arranged with recesses (76 or 78), possibly taking the form of bores, in order to compensate for the mass of the unit.

9. Powered chuck as claimed in claim 1, **characterized in that** the interlock (91) is arranged as two detent pins (92, 93), both of which can be displaced, relative to a basic circle, tangentially outwards against the force of a spring (96, 97) in an open or V-shaped recess (62'') arranged in the second component (sleeve 44) and which are provided with inwards-facing detent lugs (94, 95) which act together with a spline (55) arranged on the actuator or on an intermediate member (item 50) which is positively connected to the actuator (20).

10. Powered chuck as claimed in one or more of claims 1 to 9, **characterized in that** the control member (63) is arranged between the pawl detents (72, 73), the clamping levers (82, 83) or the detent pins (92, 93) of the interlocks (71; 81; 91).

11. Powered chuck as claimed in one or more of claims 1 to 10, **characterized in that** the control member (63) is arranged as a pin parallel to the longitudinal axis of the main spindle (3) on the machine tool (2).

12. Powered chuck as claimed in one or more of claims 1 to 11, **characterized in that** the control member (63) is provided with a nominal breakage point, for example a constricted neck (70), preferably arranged in the area separating the two components (toothed belt pulley 41, sleeve 44) which rotate relative to one another to a limited extent.

13. Powered chuck as claimed in one or more of claims 1 to 12, **characterized in that** the first component (toothed belt pulley 41) is swivel-mounted on a shoulder (44') arranged on the second component (sleeve 44).

14. Powered chuck as claimed in one or more of claims 1 to 13, **characterized in that** an anti-friction or rolling bearing (54) is arranged between the two components (toothed belt pulley 41, sleeve 44) which rotate relative to one another to a limited extent.

**Revendications**

1. Mandrin de serrage automatique (11) avec chaîne cinématique, une broche principale, un équipement de sécurité et des mors de serrage (13) se laissant déplacer en direction radiale dans un mandrin (12), liés à un élément de réglage (20) qui est entraîné via la chaîne cinématique par un élément d'entraînement, de préférence un réglage (30) disposé à l'extérieur de la broche principale (3) de la machine-outil (2), *se caractérisant par le fait que* la chaîne cinématique du mandrin de serrage automatique (11), prévue pour le réglage des mors de serrage (13) comporte deux composants (poulie de courroie dentée 41, douille 44) permettant une certaine rotation opposée l'un par rapport à l'autre, liés par un élément de commande (63) retenu dans le premier composant (poulie de courroie dentée 41) et réglable dans certaines limites à l'intérieur du deuxième composant (douille 44) rapporté sur la broche principale (3), et que, pour le blocage de cette chaîne cinématique, il est prévu un encliquetage double côté (71; 81; 91) dont les éléments d'arrêt (72, 73; 82, 83; 92, 93) s'appuient sur le deuxième composant (douille 44) et qui sont alternativement déverrouillés par l'élément de commande (63) en fonction du sens de serrage respectif des mors (13) du mandrin de serrage automatique (11).

2. Mandrin de serrage automatique d'après la revendication 1, *se caractérisant par le fait que* l'encliquetage (71) est formé par deux cliquets d'arrêt (72, 72) logés dans le deuxième composant (douille 44), qui se laissent pivoter vers l'extérieur contre la force d'un ressort (69, 69') et dont les dents (74, 75) collaborent avec une denture (55) montée sur l'élément de réglage (20) ou sur un membre intermédiaire (pièce 50) solidaire de cet élément.

3. Mandrin de serrage automatique d'après la revendication 2, *se caractérisant par le fait que* le pivotement des cliquets d'arrêt (72, 73) est limité vers l'intérieur par des butées (64', 64'') intercalés et formés par exemple par une traverse (64) du deuxième composant (douille 44).

4. Mandrin de serrage automatique d'après la revendication 1,
*se caractérisant par le fait que*
l'encliquetage (81) est formé par deux leviers de serrage (82, 83) logés dans le deuxième composant (douille 44), qui se laissent pivoter vers l'extérieur contre la force d'un ressort (69, 69') et dont les extrémités orientées vers l'élément de réglage (20) ou vers un membre intermédiaire (pièce 50) solidaire de cet élément sont conçues en tant que surfaces de serrage courbées (84, 85) et qui collaborent avec celui-ci.

5. Mandrin de serrage automatique d'après la revendication 4,
*se caractérisant par le fait que*
la surface de serrage (56) collaborant avec les leviers de serrage (83, 83) et/ou les faces de serrage (84, 85) des leviers sont munies d'une garniture de friction (57).

6. Mandrin de serrage automatique d'après une ou plusieurs des revendications 1 à 5,
*se caractérisant par le fait que*
les cliquets d'arrêt (72, 73) ou les leviers de serrage (82, 83) des encliquetages (71 ou 81) sont insérés dans un évidement (62) pratiqué dans la face frontale du deuxième composant (douille 44) et logés d'une manière orientable soit sur des boulons (76, 77; 86, 87) disposés parallèlement à l'axe de la broche principale (3) de la machine-outil (2), soit directement dans le deuxième composant (douille 44).

7. Mandrin de serrage automatique d'après une ou plusieurs des revendications 1 à 6,
*se caractérisant par le fait que*
les cliquets d'arrêt (72, 73) ou les leviers de serrage (82, 83) des encliquetages (71 ou 81) sont logés d'une manière orientable dans le deuxième composant (douille 44) de sorte qu'en position de verrouillage, ils se trouvent parallèlement à l'axe passant entre eux.

8. Mandrin de serrage automatique d'après la revendication 7,
*se caractérisant par le fait que*
les cliquets d'arrêt (72, 73) ou les leviers de serrage (82, 83) des encliquetages (71 ou 81) sont munis d'évidements (76 ou 78), par exemple sous la forme d'alésages, pratiqués en vue de l'équilibrage des masses.

9. Mandrin de serrage automatique d'après la revendication 1,
*se caractérisant par le fait que*
l'encliquetage (91) est formé par deux boulons d'encliquetage (92, 93) insérés dans un évidement (62'') continu ou en forme de V dans le deuxième composant (douille 44) et qui, contre la force d'un ressort (96, 97), se laissent déplacer tangentiellement vers l'extérieur par rapport à un cercle de base, ces boulons étant équipés de nez d'encliquetage (94, 95) dirigés vers l'intérieur et qui s'engrènent dans une denture (55) prévue sur l'élément de réglage (20) ou sur un membre intermédiaire (pièce 50) solidaire de cet élément.

10. Mandrin de serrage automatique d'après une ou plusieurs des revendications 1 à 9,
*se caractérisant par le fait que*
l'élément de commande (63) est disposé respectivement entre les cliquets d'arrêt (72, 73), les leviers de serrage (82, 83) ou les boulons d'arrêt (92, 93) de l'encliquetage (71; 81; 91).

11. Mandrin de serrage automatique d'après une ou plusieurs des revendications 1 à 10,
*se caractérisant par le fait que*
l'élément de commande (63) est formé par un boulon disposé parallèlement à l'axe longitudinale de la broche principale (3) de la machine-outil (2).

12. Mandrin de serrage automatique d'après une ou plusieurs des revendications 1 à 11,
*se caractérisant par le fait que*
l'élément de commande (63) est muni d'une section destinée à la rupture, comme par exemple une striction (70), prévue de préférence dans l'interstice entre les deux composants (poulie de courroie dentée 41, douille 44) qui se laissent pivoter dans certaines limites en sens opposé, l'un par rapport à l'autre.

13. Mandrin de serrage automatique d'après une ou plusieurs des revendications 1 à 12,
*se caractérisant par le fait que*
le premier composant (poulie de courroie dentée 41) se laisse pivoter sur une épaule (44') prévue sur le deuxième composant (douille 44).

14. Mandrin de serrage automatique d'après une ou plusieurs des revendications 1 à 13,
*se caractérisant par le fait que*
les deux composants (poulie de courroie dentée 41, douille 44) qui se laissent pivoter dans certaines limites en sens opposé, l'un par rapport à l'autre, sont séparés par un palier lisse ou un roulement (54).

## FIG. 1

EP 0 272 394 B1

FIG. 2

FIG. 3

FIG. 4

12